# EUROPEAN PATENT APPLICATION

(11) **EP 0 900 993 A2**
(43) Date of publication of application: **10.03.1999**
(21) Application number: 98306291.0
(22) Date of filing: 06.08.1998
(51) Int. Cl.: F41H 11/16, A01B 43/00

(54) **Mine clearance apparatus**

(30) Priority: 13.08.1997 GB 9717162
(71) Applicant: TOPHAM, Peter Douglas Temple, St. Neots, Cambs. PE19 4XQ (GB)
(72) Inventor: TOPHAM, Peter Douglas Temple, St. Neots, Cambs. PE19 4XQ (GB)
(74) Representative: Price, Nigel John King

(57) **Abstract**

A mine clearance apparatus comprising:
at least two interleaved pluralities of ground lifting elements disposed generally parallel to one another to extend forwardly and downwardly relative to the direction of movement of the apparatus, forward cutting ends of said elements being arranged in use to penetrate the ground, and
means for producing relative movement between the interleaved ground lifting elements so that the soil to be cleared is lifted, broken and sieved.

## Description

The present invention relates to mine clearance and provides a mine clearance apparatus particularly for clearing mines from below the surface of the ground.

During periods of armed conflict explosive mines may be used as a means of defending areas of land. Such mines may be laid on or below ground and subsequently set so that various events may trigger detonation.

Clearance of mines after, for example, the cessation of hostilities is necessary as they represent a hazard to both military personnel and civilians.

A number of methods for mine clearance exist. One such method involves use of mechanical flails which are attached to a boom and mounted on, for example, a tank. The flails are rotated so that they strike the ground thereby detonating set mines and dislodging unset mines for ease of destruction or removal. However, this method is only suitable for removal of mines on or immediately below the surface of the ground. In addition, the flails may cause mines to be scattered and the impact of the flails may also produce clouds of dust, particularly in dry or sandy areas.

International Patent Application WO 96/37751 describes an alternative method of mine clearance involving use of a machine which comprises trailing detonating chains or fingers, ground-penetrating tines and an adjustable ground shear blade capable of planing the surface of, or excavating, the ground. A first conveyor or trace conveys material cleared from the path of travel of the machine rearwardly to a second conveyor or trace which deposits the material to the side of the cleared path. The method described thereby allows rapid removal of mines from loosely packed or sandy soil.

The present invention provides an apparatus for clearing mines, particularly from below ground. In particular, it provides an effective means of clearing mines from ground which has been compacted over a period of time or which has become overgrown.

The present invention provides a mine clearance apparatus comprising:
at least two interleaved pluralities of ground lifting elements disposed generally parallel to one another to extend forwardly and downwardly relative to the direction of movement of the apparatus, forward cutting ends of said elements being arranged in use to penetrate the ground, and
means for producing relative movement between the said interleaved ground lifting elements so that the soil to be cleared is lifted, broken and sieved and any mines are transported rearwardly.

It is preferable that the cutting ends of the ground lifting elements overlap laterally to encourage the cutting of any roots and to reduce the possibility of roots and debris becoming trapped and jamming the lifting elements. The cutting ends of the ground lifting elements preferably overlap laterally by up to 4 cm.

The cutting ends of the ground lifting elements may comprise shares. Shares of appropriate size and shape may selected according to the type and depth of soil to be cleared. The means for producing relative movement may comprise means for moving one or more of the pluralities of ground lifting elements. Such means are conveniently provided by mounting one or more of the pluralities of ground lifting elements on a crankshaft which may be rotated.

The mine clearance machines described in the prior art are effective for removing mines from loosely packed, sandy soils. However, considerable force would be required to drive a ground shearing blade through compacted soil. The present invention accordingly provides an apparatus comprising moving ground lifting elements which can efficiently cut through compacted or heavy clay soils and requires less driving force than the machines described in the prior art.

The cleared soil may be used for agricultural purposes. For example, seed may be planted directly in the ground which the mine clearance apparatus has cleared.

Exemplary embodiments of the invention are described below with reference to the accompanying drawings, in which:
Figure 1 is a diagrammatic side view of an embodiment of mine clearance apparatus in accordance with the invention;
Figure 2 is a diagrammatic top plan view of the mine clearance apparatus of Figure 1, on a different scale;
Figure 3 is a diagrammatic close up top plan view of the interleaved ground lifting elements of the Figure 1 apparatus;
Figures 4A-4G are a series of eight diagrammatic side views of the interleaved ground lifting elements of Figure 3, viewed in the direction of arrow IV in Figure 3 and on a different scale, showing a sequence of movements; and
Figure 5 is a diagrammatic sectional view of a crankshaft employed in the apparatus of Figure 1.

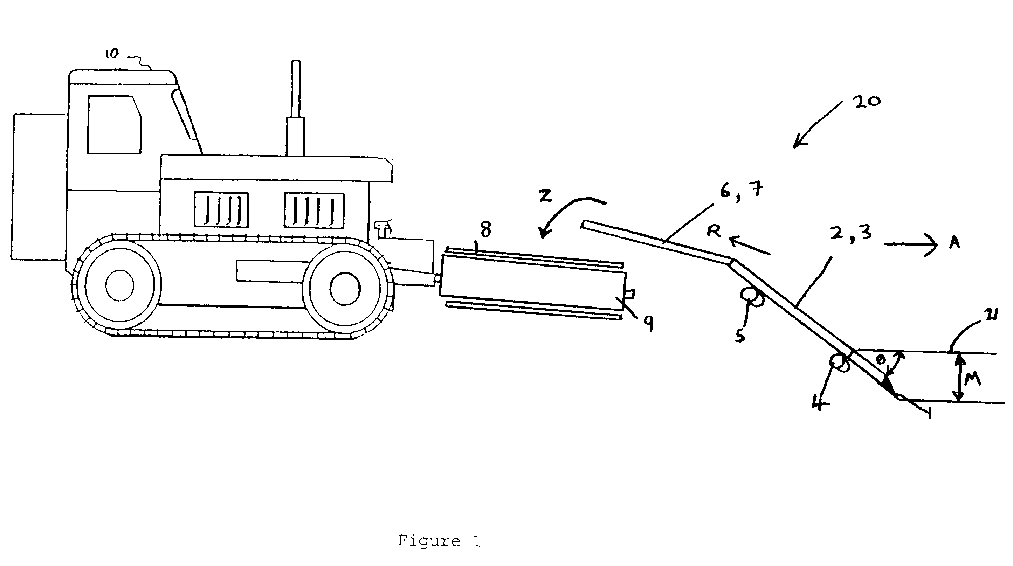

A preferred embodiment of mine clearance apparatus 20 is shown in Figure 1 attached to a means 10, such as a tractor, crawler, tank or lorry, for propelling the apparatus across the ground to be cleared in the direction indicated by arrow A. For reasons of clarity the apparatus 20 is shown without a supporting framework. The construction of the supporting framework will depend on the number and size of the ground lifting elements and the type of ground to be cleared. The framework will be liftable by the means 10 to enable the apparatus 20 to be lifted clear of the ground for improved manoeuvrability.

The apparatus 20 has a leading edge 1 which includes two sets of ground lifting elements 2, 3. Each set includes a plurality of elements 2, 3 which are positioned to penetrate the ground 21 at an angle θ in the range of about 10° to about 40° to the ground 21 and to a vertical depth M of up to about 750mm, preferably from about 350mm to about 500mm. The angle θ of attack at which the ground lifting elements penetrate the ground 21 may be varied and as the angle is increased the rate at which soil is moved rearward is decreased. The penetrating depth may be regulated by means of an adjustable depth wheel (not shown) or an electronic device (not shown). As the apparatus 20 is propelled forward the leading edge 1 is driven through the ground.

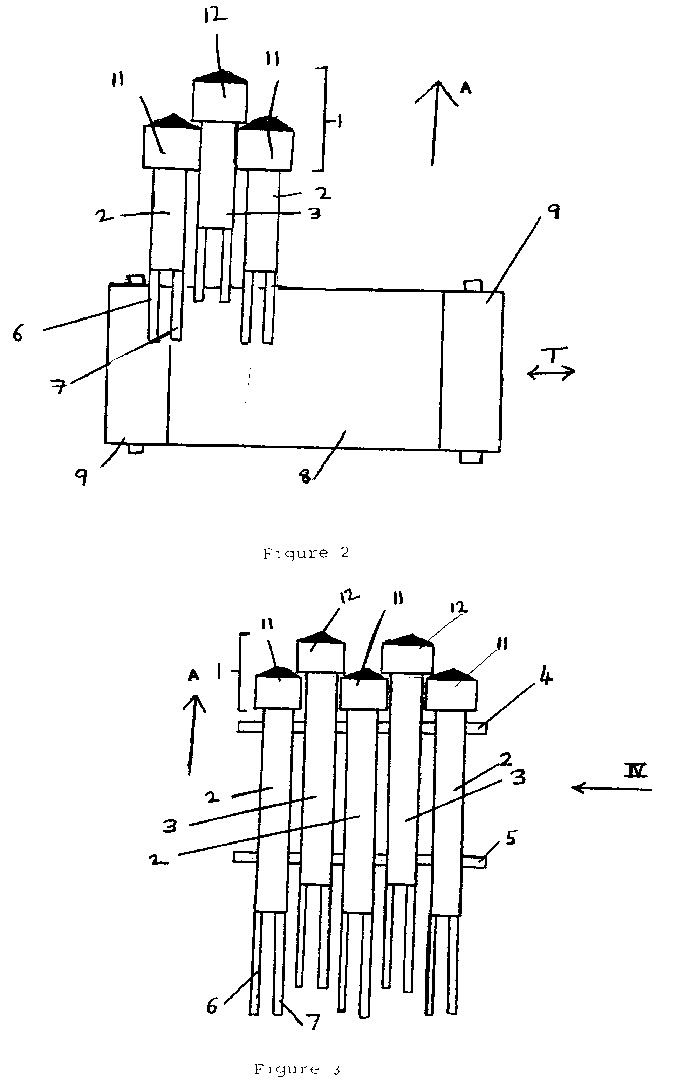

Referring to Figures 2 to 4 of the drawings, the forward end of each ground lifting element 2, 3 has a cutting end or share 11, 12. These cutting ends 11, 12 form the leading edge 1 of the apparatus and, in use, penetrate the ground to cut the roots of plants and generally improve the penetration of the apparatus.

The ground lifting elements 2, 3 each have a main body rearwardly of their respective shares 11, 12. Mounted at the rear of each main body are a pair of tines 6, 7, whose purpose will be discussed below.

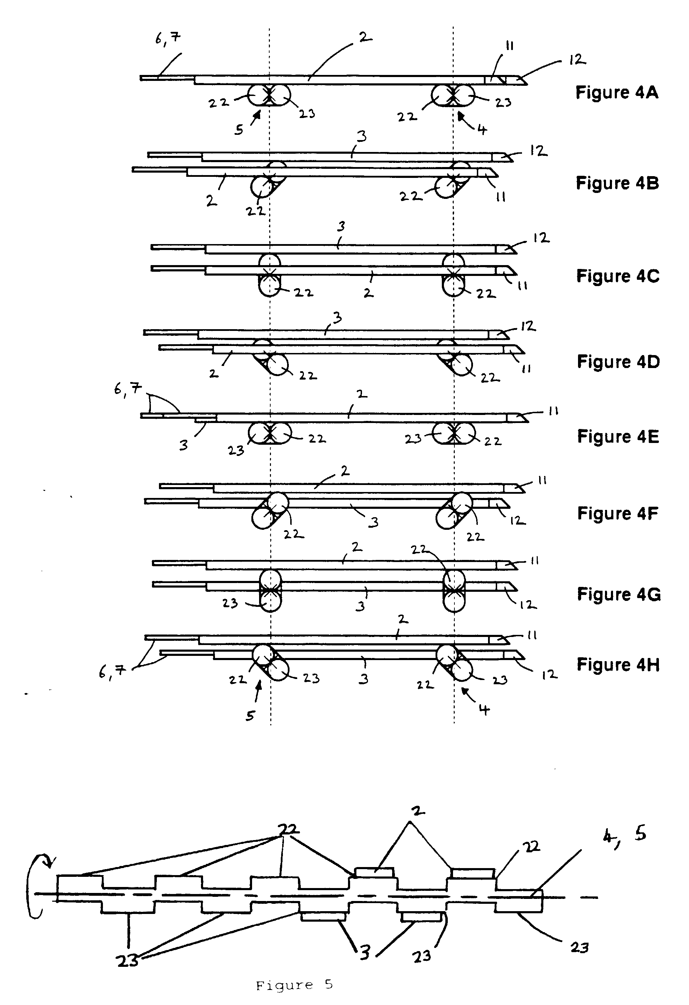

A pair of crankshafts 4, 5 are provided extending transversely across the apparatus underneath the ground lifting elements 2, 3 to drivably support them. Each crankshaft 4, 5 has a first set of webs 22 and a second set 23 offset therefrom by 180°. The ground lifting elements 2, 3 in the illustrated embodiment are divided into two sets; a first set comprising elements 2 and a second set comprising elements 3 alternately interleaved with the elements 2 of the first set. Each ground lifting element 2 of the first set is rotatably journalled on one of the webs 22 of the first set of webs 22 of each of the pair of crankshafts 4, 5. Each ground lifting element 3 of the second set is rotatably journalled on a web 23 of the second set of crankshaft webs 23. In the illustrated embodiment, the webs 22, 23 are offset from each other by 180° and are both offset from the axis of rotation of the crankshaft, marked with a cross in Figure 4. If three sets of moveable ground lifting elements were to be provided (not shown) the crankshaft webs would advantageously be positioned 120° apart around the axis of crankshaft rotation.

In use, when the leading edge 1 of the apparatus is positioned at its operating depth and the apparatus is being driven forwards in direction A, both crankshafts 4, 5 are rotated at the same speed in the counterclockwise direction when viewed from the right side of the apparatus as in Figures 1 and 4. In Figures 4A-4H, the increment of crankshaft rotation between each of the sequences of Figures 4A - 4H is 45°. For clarity, in Figures 4A-4H the elements 2, 3 are not shown inclined, i.e. the angle θ of attack is zero. From the position shown in Figure 4A, in which the ground lifting elements 2, 3 of the two sets as well as their tines 6, 7, are laterally aligned, to the position shown in Figure 4C, the cutting ends 12 at the forward ends of the ground lifting elements 3 of the second set are moved rearwardly and upwardly relative to both the axes of rotation (marked with crosses) of the crankshafts 4, 5, as well as relative to the cutting ends 11 at the forward ends of the ground lifting elements 2 of the first set which elements 2 are being moved downwardly and forwardly relative to the axes of rotation of the crankshafts 4, 5.

From the position shown in Figure 4C, continued counterclockwise rotation of the crankshafts 4, 5 lowers the ground lifting elements 3 of the second set and raises the elements 2 of the first set whilst continuing to move them rearwardly and forwardly respectively, until the position shown in Figure 4E is reached, in which position the relative orientations of the two sets of ground lifting elements 2, 3 are reversed relative to the starting position defined in Figure 4A.

Continued counter-clockwise rotation of the crankshafts 4, 5 then starts by moving the ground lifting elements 3 of the second set downwardly and forwardly, whilst the elements 2 of the first set are moved upwardly and rearwardly, as shown in the sequences of Figures 4E - 4G. From the position shown in Figure 4G, continued rotation of the crankshafts through the Figure 4H position to the Figure 4A position continues the rearward movement of the first set of ground lifting elements 2, but this is continued with a lowering movement. Similarly, the forward motion of the second set of ground lifting elements 3 is continued, but in combination with a lifting movement.

Thus the two sets of ground lifting elements 2, 3 are always 180° out of phase in their rotary motion so that adjacent cutting ends 11, 12 are continuously alternated to the leading position, one taking the forward penetrating position followed by the other and vice-versa.

Continuing to drive the crankshafts 4, 5 counter-clockwise whilst the apparatus 20 is propelled forwards causes the ground at the leading edge 1 to be cut and lifted upwardly and moved rearwardly, in direction R in Figure 1, by the first and second sets of ground lifting elements 2, 3 alternately. This rearward movement is akin to a "walking" action, large lumps of soil and any mines being alternately supported on different sets of elements 2, 3 and being "walked" rearwardly by the net rearwards movement of the set of elements and tines on which it is supported at the time. As the soil is conveyed rearwardly it breaks up further and small soil particles fall through the gaps between the main bodies of the elements 2, 3. The tines 6, 7 at the rear of the elements 2, 3 further break up any lumps of soil before depositing any larger debris and mines on a transverse conveyor 8 provided rearwardly of the tines 6, 7.

The alternating movement of the ground lifting elements 2, 3 creates a jostling motion so that soil is lifted and moved rearwardly while being broken into small particles. The gaps between the tines 6, 7 are sufficient to allow soil particles and small stones to fall through to the ground and to retain and expose the collected mines and larger debris.

The mines and larger debris can then be allowed to pass, in the direction of arrow Z in Figure 1, onto the continuously moving transverse conveyor 8. The conveyor 8 is advantageously reversible, to allow choice as to which side of the apparatus the debris is to be deposited and to enable it to be freed in the event of a jam. The transverse conveyor is driven by two rollers 9. Gaps between the bars of the conveyor 8 permit remaining soil particles to fall through. The mines are conveyed transversely, in either direction T in Figure 2, substantially perpendicular to the direction of motion of the mine clearance apparatus, to a location alongside the apparatus. They may then be detonated or removed for further disposal.

The cutting ends 11, 12 of the ground lifting elements 2, 3 are laterally overlapped, as shown most clearly in Figures 2 and 3, to encourage the cutting of any roots and to reduce the possibility of roots and debris becoming trapped and jamming the ground lifting elements 2, 3. The lateral overlap between adjacent shares may advantageously be about 4 cm. The cutting ends 11, 12 are thus able to penetrate compacted ground and cut through plant roots or debris present.

The "throw" of the webs 22, 23 of the crankshafts 4, 5 is selected so as to allow for the lateral overlap of adjacent cutting ends 11, 12 without these ends 11, 12 colliding as they move around each other.

The angle of the main parts of the ground lifting elements determines the rate at which the soil is conveyed backwards and is determined according to the soil conditions expected. The ground lifting elements 2, 3 may be straight, angled or curved.

Advantageously, the crankshafts 4,5 are both capable of being reversed, ie. to be driven in a clockwise direction when viewed in the direction of arrow IV in Figure 3, to unjam the elements 2,3 if a mine or large piece of debris becomes jammed in them.

A flail (not shown) may be located over or rearward of the ground lifting elements 2, 3 to detonate set mines as the soil is loosened. If the flail is mounted rearward its efficiency in detonating mines is increased because the soil is more broken up but the risk of damage to the machine is also increased. Therefore the appropriate position can be selected according to soil conditions and the types of mine expected. If the flail is above the cutting elements these will be protected by the soil above.

A mechanical device or arm may be provided to remove the exposed mines from the lifting elements.

The illustrated embodiment of mine clearance apparatus comprises two sets of interleaved pluralities of moveable ground lifting elements 2, 3. Rather than moving both sets of elements 2, 3, relative movement between the elements may be produced by movement of only one set whilst the other remains fixed.

The mine clearance apparatus may also comprise other numbers of pluralities of ground lifting elements 2, 3, for example three of the three. In this case, any pluralities may be fixed and relative movement between the elements may be produced by movement of the other two pluralities either in or out of phase.

In another embodiment of the invention (not illustrated) the mine clearance apparatus may comprise ground lifting elements wherein the forward sections of a first plurality of alternate ground lifting elements are mounted on a crankshaft while the rear sections are fixed and the forward sections of a second interposed plurality of ground lifting elements are fixed while the rear sections are mounted on a second crankshaft. Rotation of each or both of the crankshafts either in or out of phase may then produce relative motion of the cutting elements.

Power to the mine clearance apparatus may be provided from the means 10 propelling it or from a self-contained power pack. Power from the propelling means 10 may be relayed to the crankshafts 4, 5 to drive the lifting elements 2, 3 by hydraulic means or by using a chain or preferably a belt which will slip if the lifting elements become jammed.

In case of the accidental detonation of a mine during collection, parts of the apparatus which are susceptible to wear or explosion damage are advantageously easily replaceable.

The operative elements of the apparatus are described above. The skilled person would readily be able to construct an appropriate supporting mechanism including, as necessary, means to adjust the relative positions and orientations of the operative elements.

The mine clearance apparatus of the present invention enables mined ground in which the soil has become compacted or overgrown to be cleared with greater efficiency than with prior art machines and methods.

## Claims

1. A mine clearance apparatus comprising:
at least two interleaved pluralities of ground lifting elements disposed generally parallel to one another to extend forwardly and downwardly relative to the direction of movement of the apparatus, forward cutting ends of said elements being arranged in use to penetrate the ground, and
means for producing relative movement between the interleaved ground lifting elements so that soil to be cleared is lifted, broken and sieved and any mines are transported rearwardly.

2. An apparatus according to claim 1 wherein the relative movement between the interleaved pluralities of ground lifting elements is both forward and rearward as well as upward and downward.

3. An apparatus according to claim 1 or claim 2 wherein the forward cutting ends of at least some of the ground lifting elements are arranged, in use, to circulate about an axis transverse to the direction of movement of the apparatus.

4. An apparatus according to claim 3 where a first plurality of ground lifting elements is arranged to circulate about the axis out of phase with a second plurality of ground lifting elements.

5. An apparatus according to claim 4 wherein the lifting elements are 180° out of phase.

6. An apparatus according to any one of the preceding claims wherein the forward cutting ends of the ground lifting elements overlap in a direction transverse to the direction of movement of the apparatus.

7. An apparatus according to claim 6 wherein the cutting ends of the lifting elements overlap by up to about 4 cm.

8. An apparatus according to any one of the preceding claims, wherein the ground lifting elements are widest, in the transverse direction, at their forward cutting ends, with gaps being provided between adjacent ground lifting elements rearwardly of the forward cutting ends to sieve soil being conveyed rearwardly along the elements.

9. An apparatus according to any one of the preceding claims which comprises only two interleaved pluralities of ground lifting elements.

10. An apparatus according to any one of the preceding claims, wherein the ground lifting elements are generally longitudinal and extend generally parallel to one another.

11. An apparatus according to any one of the preceding claims, wherein different ones of the ground lifting elements are successively lifted and moved rearwardly, before being lowered.

12. An apparatus according to any one of the preceding claims, wherein the ground lifting elements are divided into at least two pluralities of interleaved elements, the elements of at least one of the pluralities being arranged to be lifted up through the elements of said other plurality, moved rearwardly relative to the elements of said other plurality and then lowered back down through the elements of said other plurality to support and transport any mines rearwardly relative to the elements of said other plurality.

13. An apparatus according to claim 12, wherein two pluralities of interleaved elements are provided, both operating in the same way but out of phase with one another, whereby any mines are supported alternately on the elements of said two pluralities and, due to the supporting elements' rearward motion when uppermost, are transported rearwardly thereby.

14. An apparatus according to any one of claims 1 to 12, wherein one of the pluralities of ground lifting elements is fixed and relative movement between the interleaved ground lifting elements is produced by movement of the or each other plurality of ground lifting elements, either in or out of phase.

15. An apparatus according to any one of the preceding claims wherein said ground lifting elements are adapted to protrude into the ground to depth of up to about 750mm.

16. An apparatus according to claim 15 wherein the ground lifting elements are adapted to protrude into the ground to a depth of from about 350mm to about 500mm.

17. An apparatus according to any one of the preceding claims wherein the cutting ends of the ground lifting elements are shares.

18. An apparatus according to any one of the preceding claims wherein the ground lifting elements are mounted on at least one crankshaft and relative movement between the pluralities of ground lifting elements is produced by rotation of the crankshaft.

19. An apparatus according to claim 18 wherein the ground lifting elements are mounted on two or more crankshafts and relative movement between the pluralities of ground lifting elements is produced by in-phase rotation of the crankshafts.

20. An apparatus according to claim 18 wherein the forward sections of alternate ground lifting elements are mounted on a crankshaft while the rear sections are fixed and the forward sections of the interposed ground lifting elements are fixed while the rear sections are mounted on a second crankshaft and relative motion of the ground lifting elements is produced by rotation of each or both crankshafts either in or out of phase.

21. An apparatus according to any one of claims 1 to 3, wherein there are provided three or more interleaved pluralities of ground lifting elements.

22. An apparatus according to any one of the preceding claims which further comprises a means for moving a collected mine to a location away from the forward path of the mine clearance apparatus.

23. An apparatus according to claim 22 wherein the means for moving a collected mine comprises a conveyer capable of conveying the mine substantially perpendicular to the direction of motion of the mine clearance apparatus to a location alongside the apparatus.

24. An apparatus according to claim 22 wherein the means for moving a collected mine comprises a mechanical lifting device.

25. An apparatus according to any one of the preceding claims which further comprises a means for propelling the mine clearance apparatus across the ground to be cleared.

26. An apparatus according to claim 25 wherein the means for propelling the mine clearance apparatus is a tractor, crawler, tank or lorry.

27. An apparatus according to any one of the preceding claims, further comprising means for adjusting the vertical depth to which the forward cutting ends of the ground lifting elements penetrate the ground in use.

28. An apparatus according to any one of the preceding claims, further comprising means for varying the angle between the ground and the forwardly and downwardly extending ground lifting elements.

29. An apparatus according to any one of the preceding claims, wherein the means for producing relative movement between the interleaved ground lifting element is reversible so as to enable reversal of the relative movement.

30. A mine clearance apparatus constructed and arranged to operate substantially as hereinbefore described with reference to the accompanying drawings.
